Europäisches Patentamt

European Patent Office

Office européen des brevets

(19)

(11) Publication number: **0 153 749 B1**

# EUROPEAN PATENT SPECIFICATION

(12)

(45) Date of publication of patent specification: **03.07.91**　(51) Int. Cl.⁵: **H04N 7/087, H04N 5/445**

(21) Application number: **85102246.7**

(22) Date of filing: **28.02.85**

(54) **Digital transmission system for transmitting and displaying pictures and data.**

(30) Priority: **28.02.84 JP 38314/84**

(43) Date of publication of application:
**04.09.85 Bulletin 85/36**

(45) Publication of the grant of the patent:
**03.07.91 Bulletin 91/27**

(84) Designated Contracting States:
**CH DE FR GB LI**

(56) References cited:
**DE-A- 3 116 422**　　**DE-B- 2 325 681**
**GB-A- 1 528 948**　　**GB-A- 2 107 953**
**US-A- 4 016 361**　　**US-A- 4 302 771**
**US-A- 4 455 570**

(73) Proprietor: **MITSUBISHI DENKI KABUSHIKI KAISHA**
**2-3, Marunouchi 2-chome Chiyoda-ku Tokyo 100(JP)**

(72) Inventor: **Fukushima, Nobuo**
**No. 225-68, Wakabamachi**
**Isahaya-shi Nagasaki(JP)**

(74) Representative: **Lehn, Werner, Dipl.-Ing. et al**
**Hoffmann, Eitle & Partner Patentanwälte Arabellastrasse 4**
**W-8000 München 81(DE)**

**Description**

The invention relates to a system for displaying motion pictures, still pictures and character data on a plural number of terminal display units.

From DE-A-3 116 422, a digital transmission system is known which comprises: a signal processing unit for multiplexing digital signals with motion picture data and other data; a network for transmitting said digital signals thus multiplexed; and a plurality of display units each of which receives some of said digital data to display motion pictures and other data on a single display screen.

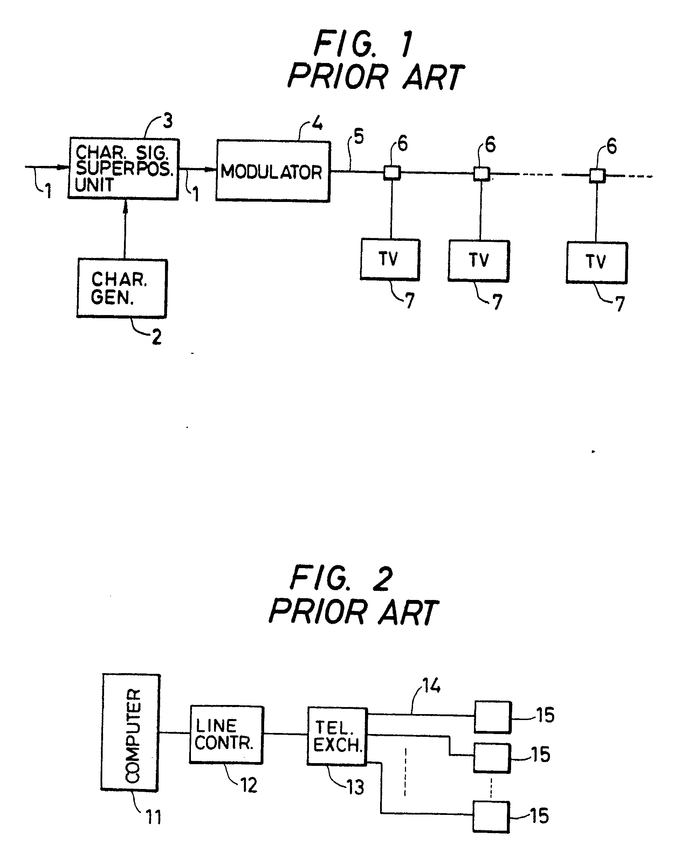

Other examples of conventional display systems are shown in Figs. 1 and 2 of the accompanying drawings. In Fig. 1, reference numeral 1 designates a video signal line; 2, a character generator; 3, a character signal superposing unit; 4, a modulator; 5, an RF signal line; 6, distributors; and 7, television sets. In Fig. 2, reference numeral 11 designates a computer; 12, a line controlling unit; 13, a telephone exchange; 14, telephone lines; and 15, terminal display units.

The system as shown in Fig. 1 operates as follows: the video signal 1 and a signal outputted by the character generator 2 are multiplexed in an analog mode by the character signal superposing unit 3 and applied as an RF signal to the signal line 5 by the modulator 4. The RF signal thus applied is delivered through the distributors 6 to the television sets, in response to which motion pictures or character data can be selectively displayed on the terminal units (television sets).

In the system shown in Fig. 2, a number of items of data are registered in the computer 11. Of the data thus registered, data items requested from the terminal display units are transmitted through the line controlling unit 12 and the telephone exchange 13 to the terminal display units 15 so as to be displayed thereon.

In the system shown in Fig. 1, it is impossible to display motion pictures and character data simultaneously, and it is also impossible to transmit a large number of data items at the same time because character data must be superposed in the blanking interval of the video signal. On the other hand, the system shown in Fig. 2 is advantageous in that large numbers of data items can be transmitted to the terminal display units; however, it is still disadvantageous in that it cannot display motion pictures because it uses telephone lines for data communication.

An object of the invention is to provide a digital transmission system in which digital transmission paths are provided to allow terminal display units to display motion pictures and still pictures simultaneously, and in which a large number of items of data can be transmitted.

According to the invention, there is provided a digital transmission system in which motion pictures, still pictures and character data are displayed on a plurality of terminal display units comprising: a signal processing unit for multiplexing digital signals with motion picture, still picture and character data; a network for transmitting said digital signals thus multiplexed; and a plurality of display units each of which is connected to receive said digital signal to display motion picture, still picture and character data on a single display screen, wherein said signal processing unit comprises: an analog-to-digital converter and frame memory, said analog-to-digital converter being arranged to receive a composite video signal to store frames of said video signal in said frame memory and to supply data to said network; a character and pattern signal generator having an output coupled to said network; a central processing unit for controlling input and output of data between a main memory and said character and pattern signal generator; and a signal transmission controller and a bus controller being arranged to control the flow of data to said network from said analog-to-digital converter, said character and pattern signal generator, and said main memory.

For a better understanding of the invention, and to show how the same may be carried into effect, reference will now be made, by way of example, to the accompanying drawings, in which:

Figs. 1 and 2 are block diagrams showing two examples of a conventional digital transmission system; and
Fig. 3 is a block diagram showing a preferred embodiment of the invention.

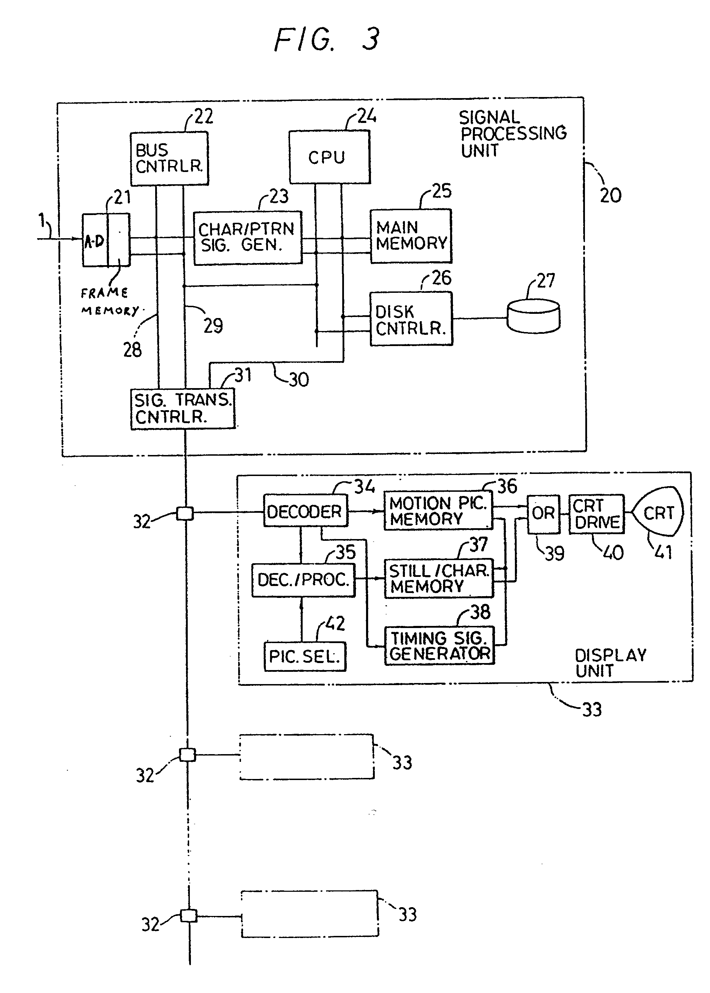

A preferred embodiment of the invention will be described with reference to Fig. 3.

In Fig. 3, reference numeral 20 designates a signal processing unit; 21, an A/D converter and frame memory; 22, a cyclic bus controller; 23, a character and pattern signal generator; 24, a CPU; 25, a main memory; 26, a disk controller; 27, a hard disk; 28, a cyclic bus; 29, a program control channel; 30, a direct memory access bus; 31, a signal transmission controller; 32, signal distributors; 33, display units; 34, a decoder; 35, a command decoding and still picture and character processing unit; 36, a motion picture memory; 37, a still picture and character memory; 38, a timing signal generator; 39, an OR gate; 40, a CRT drive circuit; 41, a CRT; and 42, a picture selecting panel.

In the system thus constructed, a video signal on the line 1 is subjected to analog-to-digital conversion by the A/D converter 21 and temporarily stored in the frame memory. The data thus stored is cyclically applied to the bus 28 in response to a command from the bus controller 22. On the other hand, character and graphic data, formed by a computer composed of the circuit elements 24,25,26,27,29 and 30, are supplied to the character and pattern signal generator 23 where they are converted into a pictorial pattern which is applied to the cyclic bus. Therefore, the signal on the cyclic bus 28 is a picture signal in which still picture (pattern) data from generator 23 is superposed on motion pictures which have been converted into digital data by A/D converter 21. With the aid of the signal transmission controller 31, the picture signal, after being multiplexed with commands, characters, graphic codes and new pattern data delivered by the buses 29 and 30, is outputted as a digital signal.

The signal thus outputted is applied to the display units 33 through the signal distributors 32. At each display unit 33, the signal applied thereto is divided into components. The motion picture data (the picture signal on which the pattern data is superposed) is written into the motion picture memory 36. On the other hand, in the processing unit 35, the commands, characters, graphic codes and new pattern data are processed according to the selection signal outputted by the picture selecting panel 42 with respect to the command data so that the necessary picture data is written into the memory 37. Picture data is read out of both of the memories 36 and 37 according to the timing signal provided by the timing signal generating circuit 38 and applied to the OR gate 39. The output of the OR gate 39 is applied to the CRT drive circuit 40 to drive the CRT 41.

In the above-described embodiment, the network is not particularly specified, and any network using coaxial cables or optical fibers may be employed so long as it can transmit digital signals.

As is apparent from the above description, the system of the invention includes a signal processing unit for multiplexing digital signals with motion picture, still picture and character data, a network for transmitting the digital signals thus multiplexed, and a plurality of display units each of which can display motion picture, still picture and character data on the same screen simultaneously. Therefore, the display units can selectively display different data together with motion pictures. Thus, the system of the invention can efficiently display a variety of data.

## Claims

1. A digital transmission system in which motion pictures, still pictures and character data are displayed on a plurality of terminal display units (33), comprising:

    a signal processing unit (20) for multiplexing digital signals with motion picture, still picture and character data;

    a network (32) for transmitting said digital signals thus multiplexed; and

    a plurality of display units (33) each of which is connected to receive said digital signal to display motion picture, still picture and character data on a single display screen (41),

    wherein said signal processing unit (20) comprises: an analog-to-digital converter and frame memory (21), said analog-to-digital converter being arranged to receive a composite video signal to store frames of said video signal in said frame memory and to supply data to said network (32); a character and pattern signal generator (23) having an output coupled to said network (32); a central processing unit (24) for controlling in put and output of data between a main memory (25) and said character and pattern signal generator (23); and a signal transmission controller (31) and a bus controller (22) being arranged to control the flow of data to said network from said analog-to-digital converter (21), said character and pattern signal generator (23), and said main memory (25).

2. A digital transmission system according to claim 1, wherein each said display unit (33) comprises: a motion picture memory (36); a still picture and character memory (37); a command decoding and still picture and character processing unit (35) having an output applied to an input of said still picture and character memory (37); a decoder (34) for distributing portions of a signal received from said network to said motion picture memory (36) and said command decoding and still picture and character processing unit (35); an OR gate (39) receiving outputs of said motion picture memory (36) and said still picture and character memory (37); a display means (41); and means (40) for driving said display means (41) in response to an output of said OR gate (39).

3. A digital transmission system according to claim 1 or 2 further comprising a cyclic bus (28) coupled to said signal transmission controller (31), wherein said analog-to-digital converter and frame memory (21) and said character and pattern signal generator (23) are each connected to supply data to said cyclic bus (28) under control of said bus controller (22).

## Revendications

1. Un système de transmission numérique dans lequel les images en mouvement, les images fixes et les données de caractères sont affichées sur plusieurs unités d'affichage terminales (33), comprenant :

une unité de traitement des signaux (20) pour multiplexer les signaux numériques avec les images en mouvement, les images fixes et les données de caractères ;

un réseau (32) pour transmettre lesdits signaux numériques ainsi multiplexés ; et

plusieurs unités d'affichage (33) dont chacune est connectée de façon à recevoir ledit signal numérique pour afficher les images en mouvement, les images fixes et les données de caractères sur un seul écran d'affichage (41),

dans lequel ladite unité de traitement des signaux (20) comprend : un convertisseur analogique-numérique et une mémoire de trame (21), ledit convertisseur analogique-numérique étant disposé de façon à recevoir un signal vidéo composite pour stocker les trames dudit signal vidéo dans ladite mémoire de trame et à fournir des données audit réseau (32) ; un générateur de signaux de caractères et de motifs (23) ayant une sortie couplée audit réseau (32) ; une unité centrale de traitement (24) pour commander l'entrée et la sortie des données entre une mémoire principale (25) et ledit générateur de signaux de caractères et de motifs (23) ; et une unité de contrôle de transmission des signaux (31) et une unité de contrôle de bus (22) étant disposées de façon à commander le flux des données vers ledit réseau provenant dudit convertisseur analogique-numérique (21), dudit générateur de signaux de caractères et de motifs (21), et de ladite mémoire principale (25).

2. Un système de transmission numérique selon la revendication 1, dans lequel chaque unité d'affichage (33) comprend : une mémoire d'images en mouvement (36) ; une mémoire d'images fixes et de caractères (37) ; une unité de décodage des commandes et de traitement des images fixes et des caractères (35) ayant une sortie appliquée à une entrée de ladite mémoire d'images fixes et de caractères (37) ; un décodeur (34) pour distribuer des portions d'un signal reçu provenant dudit réseau vers ladite mémoire d'images en mouvement (36) et vers ladite unité de décodage des commandes et de traitement des images fixes et des caractères (35) ; une porte OU (39) recevant les sorties de ladite mémoire d'images en mouvement (36) et de ladite mémoire d'images fixes et de caractères (37) ; un moyen d'affichage (41) ; et un moyen (40) pour entraîner ledit moyen d'affichage (41) en réponse à une sortie de ladite porte OU (39).

3. Un système de transmission numérique selon la revendication 1 ou 2 comprenant en outre un bus cyclique (28) couplé à ladite unité de contrôle de transmission des signaux (31), où ledit convertisseur analogique-numérique et ladite mémoire de trame (21) et ledit générateur de signaux de caractères et de motifs (23) sont chacun connectés pour fournir des données au bus cyclique (28) sous le contrôle de ladite unité de contrôle du bus (22).

## Ansprüche

1. Digitales Übertragungssystem, in welchem Laufbilder, Stehbilder und Zeichendaten auf einer Vielzahl von End-Anzeigeeinheiten (33) wiedergegeben werden, welches umfaßt:

eine Signalverarbeitungseinheit (20) zum Multiplexen von digitalen Signalen mit Daten von Laufbildern, Stehbildern und Zeichen;

ein Netzwerk (32) zum Übertragen der so gemultiplexten digitalen Signale; und

eine Vielzahl von Anzeigeeinheiten (33), von denen jede angeschlossen ist, die digitalen Signale zu empfangen, um Laufbilder, Stehbilder und Zeichendaten auf einem einzigen Anzeigeschirm (41) wiederzugeben,

wobei die Signalverarbeitungseinheit (20) umfaßt: einen Analog/Digitalwandler und einen Bildspeicher (21), wobei der Analog/Digitalwandler vorgesehen ist, ein zusammengesetztes Videosignal zu empfangen, um Einzelbilder des Videosignals in dem Bildspeicher zu speichern, und um Daten an das Netzwerk (32) zu liefern; einen Zeichen- und Mustersignalgenerator (23), welcher einen an das Netzwerk (32) gekoppelten Ausgang aufweist; eine zentrale Verarbeitungseinheit (24) zum Steuern von Dateneingabe und -ausgabe zwischen einem Hauptspeicher (25) und dem Zeichen- und Mustersignalgenerator (23); und eine Signalübertragungssteuerung (31) und eine Bussteuerung (22), welche vorgesehen sind, den Datenfluß zum Netzwerk von dem Analog/Digitalwandler (21), dem Zeichen- und Mustersignalgenerator (23), und dem Hauptspeicher (25) zu steuern.

2. Digitales Übertragungssystem nach Anspruch 1, dadurch **gekennzeichnet**, daß jede Wiedergabeeinheit (33) umfaßt: einen Speicher (36) für Laufbilder; einen Stehbild- und Zeichenspeicher (37); eine Befehlsdekodier-, Stehbild- und Zeichen-Verarbeitungseinheit (35), welche einen Ausgang aufweist, der auf einen Eingang des Stehbild- und Zeichenspeichers (32) gegeben ist; einen Dekoder (34) zum Verteilen von Teilen eines von dem Netzwerk empfangenen Signales an den Speicher (36) für Laufbilder, die Befehlsdekodierung, und die Stehbild- und Zeichenverarbeitungseinheit (35); ein ODER-Gatter (39), welches Ausgaben von dem Speicher (36) für Laufbilder und dem Stehbild- und Zeichenspeicher (37) empfängt; eine Anzeigeeinrichtung (41); und Einrichtungen (40) zum Treiben der Anzeigeeinrichtung (41) auf eine Ausgabe des ODER-Gatters (39) hin.

3. Digitales Übertragungssystem nach Anspruch 1 oder 2, dadurch **gekennzeichnet**, daß es ferner einen zyklischen Bus (28) umfaßt, welcher an die Signalübertragungssteuerung (31) gekoppelt ist, worin der Analog/Digitalwandler und Bildspeicher (21) und der Zeichen- und Mustersignalgenerator (23) jeweils angeschlossen sind, um Daten an den zyklischen Bus (28) unter Steuerung der Bussteuerung (22) zu liefern.

## FIG. 1
## PRIOR ART

## FIG. 2
## PRIOR ART

# FIG. 3